# EUROPEAN PATENT SPECIFICATION

(11) **EP 1 287 744 B1**
(45) Date of publication and mention of the grant of the patent: **29.03.2006**
(21) Application number: 02078597.8
(22) Date of filing: 30.08.2002
(51) Int. Cl.: A23C 19/032, A23C 19/14

(54) **Method for preparing a half-hard or hard cheese, and cheese thus obtained.**
Verfahren zur Herstellung von Halbhart- oder Hartkäse und derart hergestellter Käse
Procédé de fabrication de fromage à pâte semi-dure ou dure et fromage ainsi obtenu

(30) Priority: 30.08.2001 NL 1018856
(43) Date of publication of application: 05.03.2003
(73) Proprietor: Friesland Brands B.V., 8937 AC Leeuwarden (NL)
(72) Inventor: Van Arem, Everhardus Jacobus Franciscus, 8802 CR Franeker (NL); Hup, Gerard, 8912 TX Leeuwarden (NL)
(74) Representative: Prins, Adrianus Willem

(56) References cited:
- EP-A- 0 281 167
- EP-A- 0 359 295
- EP-A- 0 384 553
- WO-A-82/03971
- WO-A-97/38587
- TREPANIER G: "Accelerated maturation of cheddar cheese: influence of added lactobacilli and commercial protease on composition and texture" JOURNAL OF FOOD SCIENCE, INSTITUTE OF FOOD TECHNOLOGISTS. CHICAGO, US, vol. 57, no. 4, 1992, pages 898-902, XP002127100 ISSN: 0022-1147
- CHRISTENSEN J E ET AL: "PRODUCTION OF CHEDDAR CHEESE USING A LACTOCOCCUS LACTIS SSP, CREMORIS SK11 DERIVATIVE WITH ENHANCED AMINOPEPTIDASE ACTIVITY" INTERNATIONAL DAIRY JOURNAL, ELSEVIER APPLIED SCIENCE, BARKING,, GB, vol. 5, no. 4, 1995, pages 367-379, XP000865930 ISSN: 0958-6946
- DATABASE FSTA [Online] INTERNATIONAL FOOD INFORMATION SERVICE (IFIS), FRANFURT/MAIN, DE; CALIFANO A N ET AL: "Multivariate analysis of the organic acids content of Gouda type cheese during ripening." Database accession no. 2001-00-p0724 XP002198380 & JOURNAL OF FOOD COMPOSITION AND ANALYSIS 13 (6) 949-960 2000 CENT. DE INVESTIGACION Y DESARROLLO EN CRIOTEC. DE ALIMENTOS (CONICET), FAC. DE CIENCIAS EXACTAS, UNIV. NACIONAL DE LA PLATA, LA PLATA 1900, ARGENTINA. FAX 54 221 425 4853. E-MAIL ANC(A)DAL,
- DAVIS: "Cheese, Vol. 3" 1976 , CHURCHILL LIVINGSTONE , LONDON XP002198387 * page 767 - page 770 *

## Description

The invention relates to a method for preparing a half-hard or hard cheese, of the Gouda or Edam type and to a cheese thus obtained.

The conventional method for preparing a Gouda cheese comprises a ripening step, wherein the young cheese, after brining, is ripened at 12 - 14°C to, minimally, an age of four weeks. The outside of the young cheese is then provided with a conventional cheese covering means to protect the rind. During this ripening, referred to with the term "standard ripening" or, also, "natural ripening", the cheese loses moisture.

In addition, Gouda cheeses ― and, for that matter, other cheeses of the half-hard or hard type too ― are ripened as rindless cheese, while, after brining, the young cheese is packaged in foil and is then ripened at a temperature of 4 - 7°C. This technique is known as foil-ripening. Cheese ripened in this manner loses no moisture during ripening which is, in particular, of economic advantage. Additionally, a practical advantage is that foil-ripened cheese, which is often of rectangular shape, gives no or hardly any cutting losses when cut to slices or bars. By comparison, the cutting loss with standard ripened cheese, also indicated with the term "naturally ripened cheese", can run up to as much as 15%. WO 97/38587 describes such a method for preparing a Gouda cheese, wherein the packaged cheese is ripened at 7 °C, using a culture of a genetically modified *Lactobaccillus.* In a reference experiment, it is described to use the starter culture Bos and a mother microorganism culture of not-genetically modified *Lactobacillus.*

However, a disadvantage of foil-ripening is that, due to the different conditions, the cheese also undergoes a different type of ripening. With this different type of ripening, the development of flavor lags. Increasing the ripening temperature to 12 - 14°C customary for standard ripening is no option, because then, the flavor becomes deviant; notably, the flavor deficiency "bitter" occurs. Moreover, a cheese ripened in foil at those temperatures has an undesired consistency; for instance the structure or texture of the cheese can be too sandy or too soft.

The object of the present invention is to obviate these disadvantages.

Presently it has been found that a foil-ripened cheese of the hard or half-hard type said cheese being of the Gouda or Edam type can be obtained having at the end of the ripening period the higher moisture content of a conventionally foil-ripened cheese but having the flavor properties and consistency of a conventionally standard ripened cheese, through adaptations in the starter and in the ripening conditions.

Accordingly , the invention relates to a method for the preparation of a foil-ripened cheese of the hard or half-hard type said cheese being of the Gouda or Edam type wherein to a cheesemilk, in addition to a conventional amount of starter (for instance the customary amount of acid), an adjunct starter is added, which adjunct starter, compared to conventional starters, has a higher proteolytic and/or peptidolytic capacity, wherein subsequently, in a customary manner, a young cheese of the hard or half-hard type is formed, which young cheese, after brining, is packaged in foil and evacuated, and wherein the cheese packaged in foil is subjected to a ripening at a temperature in the range of 10 to 16°C.

It is noted that, it is known to use adjunct starters in addition to conventional starters for making a different type of cheese. The article of G. Trépanier et al. in J. Food Science (57) No 4 (1992), pages 898-902 describes the preparation of foil ripened Cheddar cheese with a conventional starter and a L. *casei casei* strain. Part of the ripening takes place at a temperature of 13 °C.

EP-A 384 553 relates to a method for preparing Tilsiter cheese, wherein together with the usual acidifying *Lactobacilli* and optionally further micro-organisms, for instance *Geotricum candidum ,Lactobaccillus Helveticus* or *Brevibacterium linens.* Ripening takes place after vacuum-foil packaging for example at a temperature in the range of 5-25 °C.

In a preferred embodiment, the cheese packaged in foil is subjected to a ripening at a temperature of at least 12°C and preferably 12 to 14°C. Cheeses having been subjected to a ripening at this minimum temperature meet the criterion of the Dutch Agricultural Quality Decree (Nederlandse Landbouw Kwaliteitswet) and are qualified as "naturally ripened".

Usually, the ripening step lasts at least four weeks, and preferably no longer than three months.

Thus, a foil-ripened cheese is obtained while the flavor development can be controlled to obtain a flavor and consistency comparable to those of a standard ripened cheese.

Without wishing to be bound to any theory, it is assumed that in the foil cheese prepared in the conventional manner but ripened at the too high temperature of 12 - 14°C, through the combination of the relatively high moisture content and the relatively high temperature, a number of enzymatic processes proceed too rapidly. As a result, an accumulation of certain peptides can occur, which may give rise to deviations in flavor and structure and texture.

By presently using an adjunct starter which, compared to conventional starters, has a higher proteolytic and/or peptidolytic capacity, the peptides causing the referred-to deviations are broken down.

It is possible, for that matter, to add peptidases to the cheesemilk, but as these are not only expensive but, moreover, are flushed away for approximately 90% with the whey, this option is not preferred.

Suitable adjunct starters are, for instance, known ripening accelerating starters, such as those mentioned in EP-A-0 281 167 and in NL-A-8801861. This type of adjunct starters (for instance APS₁₃ and LH-B01 and LH-B02) is commercially available from for instance Chr. Hansen (Denmark) and CSK Food Enrichment (the Netherlands).

Preferably, the adjunct starter comprises thermophilic and/or mesophilic lactic acid bacteria, while, preferably, thermophilic rod-shaped bacteria are used. By way of example, the following bacteria can be suitably incorporated in the adjunct starter which may even be a pure culture: strains, usable in foods, of the genus *Lactobacillus,* in particular *Lactobacillus helveticus* and *Lactobacillus lactis,* and of the species *Streptococcus thermophilus,* as well as mixtures thereof.

Before the addition of the adjunct starter, for that matter, the pH of this starter is preferably set at neutral, for instance by adding a suitable amount of sodium hydroxide solution. This is done to prevent the cheese preparation process from being adversely affected.

The adjunct starter can be introduced into the cheesemilk simultaneously with, before or after the addition of the conventional starter. Preferably, the adjunct starter is added simultaneously with or after the conventional starter.

As outlined, the adjunct starter does not so much play a part in the acidification process as in the addition of a package of enzymes. Good results are obtained when, based on the weight of the total cheesemilk, 0.2 to 5% by weight and preferably at least 0.5 % by weight and preferably at most 2% by weight of non-concentrated adjunct starter is added. For that matter, also deep-frozen and concentrated adjunct starter can be used, such as Direct Fat Starter (DFS) cultures, the skilled person naturally knowing how many equivalents of these cultures are needed to obtain results comparable to those obtained with non-concentrated adjunct starters.

As the cheeses prepared according to the method of the invention have different properties than the known foil-ripened cheeses, the invention also comprises foil-ripened cheese of the hard or half-hard type obtainable using the method according to the invention.

Presently, the invention will be further elaborated on the basis of the following, non-limiting examples.

### Example 1

To 16,000 liters of cheesemilk, standardized to a fat content of 3.50% by weight and 3.32 % by weight of protein were added 3.2 liters of rennet (ex CSK Food Enrichment), 10 liters of a 30wt.% calcium chloride (ex CSK Food Enrichment) solution in water, 100 liters of mesophilic starter of the type FR19 (ex CSK Food Enrichment) and 300 liters of the thermophilic culture LH-B02 (ex Chr. Hansen), consisting of rod-shaped microorganisms and cultured in skimmed milk for 20 hours at a temperature of 40°C. The pH of the thermophilic culture was brought to neutral with sodium hydroxide solution.

From the thus obtained cheesemilk, after addition of 3.5 liters of rennet (ex CSK Food Enrichment), a (Gouda) cheese of the half-hard type was prepared, in an otherwise conventional manner, while the post-heating temperature was set at 37°. The moisture content of the cheese after brining was 40.7% by weight. The cheeses were vacuum-packed in foil and stored at 14°C. The pH after 14 days of storage was 5.24.

After a ripening time of four weeks, a cheese was cut up and evaluated by a panel. The cheese could not be significantly distinguished from a traditionally ripened young Gouda cheese of the same age.

After a ripening time of eight weeks, a cheese was cut up and evaluated by a panel. The cheese could not be significantly distinguished from a traditionally ripened semi-matured Gouda cheese of the same age.

After a ripening time of fourteen weeks, a cheese was cut up and evaluated by a panel. The cheese could not be significantly distinguished from a traditionally ripened matured Gouda cheese of the same age.

### Example 2

To 390 liters of low-pasteurized cheesemilk, standardized to 3.41% protein and 2.52% fat were added 2,200 ml of mesophilic starter, type FR 19 (ex CSK Food Enrichment B.V., Leeuwarden) in addition to 176 g of a 33% solution of CaCl₂ (ex CSK Food Enrichment B.V.). As an adjunct starter, 5 1 of LH-B01 culture were added. This adjunct culture LH-B01 (ex Chr. Hansen, DK) was cultivated by high-pasteurization of skimmed milk and inoculation with the supplied concentrate at 42°C. After 22 hours, the culture had reached a pH of 4.04. After cooling to approximately 20°C, the adjunct starter was neutralized with a 10% NaOH solution to a pH value of 6.55. Until use, the adjunct culture was stored cold.

At a temperature of 30.5°C, 80 g of rennet (ex CSK Food Enrichment B.V.) were added to the inoculated cheesemilk and the milk-gel formed was cut in the customary manner and processed to curd. Then, 180 of whey were drained and 74 of wash water were added of a temperature of 46°C.

After a total processing time of 60 minutes the curd was drained and transferred to 2.5 kg loaf tins. After pressing and brining, the cheese was packaged in foil and ripened at 13°C.

After fourteen days, the cheese had a fat content, calculated on the dry matter, of 42.9% and a moisture content of 43.1%.

After six weeks of storage, the cheese was evaluated by a panel of five graders. The cheese is slightly acidic, not bitter in flavor and, as to flavor, corresponds to an Edam cheese of the same age.

After twelve weeks, the cheese was evaluated again and was rated by a panel as having an identical flavor intensity to a matured Edam cheese but having a softer consistence. The cheese was pure in flavor and not bitter.

### Example 3

To 390 1 of low-pasteurized cheesemilk, standardized to 3.49% protein and 1.72% fat were added 2,400 ml of mesophilic starter type BOS (ex CSK Food Enrichment B.V.) and 136 g of a 33% solution of CaCl₂ (ex CSK Food Enrichment B.V.). As an adjunct starter, 7.5 1 of LH-B02 were added.

LH-B02 (Chr. Hansen, DK) was obtained by high-pasteurization of skimmed milk and inoculation with concentrate at 42°C. After a good 20 hours of culturing, the culture had reached a pH of 4.00. After cooling to approximately 20°C, the culture was neutralized with a 10% NaOH solution to a pH value of 6.65. Until use, the adjunct culture was stored cold. At a temperature of 31.5°C, 90 g of rennet were added (ex CSK Food Enrichment B.V.; chymosin/pepsin ratio 75:25, strength 10,800) to the pre-ripened cheesemilk. The milk-gel was cut in the conventional manner and processed to curd. Subsequently, 175 1 of whey were drained, 90 liters of wash water were added and post-heating took place at a temperature of 30°C.

After a total processing time of 60 minutes, the curd was drained and transferred to 2.5 kg loaf tins. After pressing and brining, the cheese was packaged in foil and ripened at 13°C. After fourteen days, the cheese had a fat content based on the dry matter of 33.2% and a moisture content of 47%.

After six weeks of storage, the cheese was evaluated by a panel of five graders. The cheese was not bitter of flavor and corresponded in taste to a standard ripened cheese of young age.

After twelve weeks, the cheese was evaluated once more and rated by a panel as being of approximately the same flavor intensity as a standard ripened cheese of the same age, but with a softer consistency. The cheese was pure in taste and not bitter.

## Claims

1. A method for preparing a foil-ripened cheese of the hard or half-hard type said cheese being of the Gouda or Edam type, wherein to cheese milk, in addition to a conventional amount of starter, an adjunct starter is added, which adjunct starter, compared with conventional starters, has a higher proteolytic and/or peptidolytic capacity, subsequently, in a conventional manner, a young cheese of the hard or half-hard type is formed, which young cheese, after brining, is packaged in foil and evacuated, and wherein the foil-packed cheese is subjected to a ripening at a temperature in the range of 10 to 16°C.

2. A method according to claim 1, wherein the foil-packed cheese is subjected to a ripening at a temperature of 12 to 14°C.

3. A method according to claim 1 or 2, wherein the ripening step lasts at least four weeks.

4. A method according to any one of the preceding claims, wherein the adjunct starter comprises thermophilic and/or mesophilic lactic acid bacteria.

5. A method according to claim 4, wherein the adjunct starter comprises thermophilic, rod-shaped lactic acid bacteria.

6. A method according to claim 4 or 5, wherein the adjunct starter comprises bacteria selected from the group consisting of *Lactobacillus,* in particular *Lactobacillus helveticus* and *Lactobacillus lactis, Streptococcus thermophilus* and mixtures thereof.

7. A method according to any one of the preceding claims, wherein the non-concentrated adjunct starter is added to the cheesemilk in an amount, based on the weight of the total cheesemilk, of 0.2 - 5% by weight, preferably of 0.5 - 2 % by weight.

8. A method according to any one of the preceding claims, wherein the cheese is ripened for no longer than 3 months.

9. A foil-ripened cheese of the Gouda or Edam type, obtainable using the method according to any one of the preceding claims.

## Patentansprüche

1. Verfahren zur Herstellung eines foliengereiften Käses vom harten oder halbharten Typ, wobei der Käse vom Gouda- oder Edamer-Typ ist, wobei zusätzlich zu einer konventionellen Menge an Starter der Käsemilch ein Zusatzstarter zugefügt wird, wobei der Zusatzstarter im Vergleich zu konventionellen Startern eine höhere proteolytische und/oder peptidolytische Kapazität aufweist, worauf folgend auf konventionelle Weise ein junger Käse des harten oder halbharten Typs gebildet wird, wobei der junge Käse nach einem Einsalzen in Folie verpackt und evakuiert wird, und wobei der folienverpackte Käse einer Reifung bei einer Temperatur im Bereich von 10 bis 16°C unterworfen wird.

2. Verfahren gemäß Anspruch 1, wobei der folienverpackte Käse einer Reifung bei einer Temperatur von 12 bis 14°C unterworfen wird.

3. Verfahren gemäß Anspruch 1 oder 2, wobei der Reifungsschritt mindestens vier Wochen dauert.

4. Verfahren gemäß einem der vorstehenden Ansprüche, wobei der Zusatzstarter thermophile und/oder mesophile Milchsäurebakterien umfaßt.

5. Verfahren gemäß Anspruch 4, wobei der Zusatzstarter thermophile stäbchenförmige Milchsäurebakterien umfaßt.

6. Verfahren gemäß Anspruch 4 oder 5, wobei der Zusatzstarter Bakterien umfaßt, ausgewählt aus der Gruppe bestehend aus Lactobacillus, insbesondere Lactobacillus helveticus und Lactobacillus lactus, Streptococcus thermophilus und Mischungen daraus.

7. Verfahren gemäß einem der vorstehenden Ansprüche, wobei der nicht konzentrierte Zusatzstarter der Käsemilch in einer Menge von 0,2 bis 5 Gew.%, vorzugsweise 0,5 bis 2 Gew.%, basierend auf dem Gewicht der gesamten Käsemilch, zugefügt wird.

8. Verfahren gemäß einem der vorstehenden Ansprüche, wobei man den Käse nicht länger als 3 Monate reifen läßt.

9. Foliengereifter Käse vom Gouda- oder Edamer-Typ, erhältlich unter Verwendung des Verfahrens gemäß einem der vorstehenden Ansprüche.

## Revendications

1. Procédé pour la préparation d'un fromage affiné emballé dans une feuille d'aluminium de type dur ou semi dur, ledit fromage étant du type Gouda ou Edam, dans lequel au lait de fromagerie, en plus de la quantité classique de levain, on ajoute un levain complémentaire, lequel levain complémentaire, par rapport aux levains classiques, a une capacité protéolytique et/ou peptidolytique supérieure, ensuite, d'une manière classique, un jeune fromage de type dur ou semi dur est formé, lequel jeune fromage, après le saumurage, est emballé dans une feuille d'aluminium et évacué, et dans lequel le fromage emballé dans une feuille d'aluminium est soumis à l'affinage à une température de l'ordre de 10 à 16°C.

2. Procédé selon la revendication 1, dans lequel le fromage emballé dans une feuille d'aluminium est soumis à un affinage à une température de 12 à 14°C.

3. Procédé selon la revendication 1 ou 2, dans lequel l'étape d'affinage dure au moins quatre semaines.

4. Procédé selon l'une quelconque des revendications précédentes, dans lequel le levain complémentaire comprend des ferments lactiques thermophiles et/ou mésophiles.

5. Procédé selon la revendication 4, dans lequel le levain complémentaire comprend des ferments lactiques thermophiles en forme de bâtonnet.

6. Procédé selon la revendication 4 ou 5, dans lequel le levain complémentaire comprend des bactéries choisies dans le groupe comprenant les Lactobacillus, en particulier, le Lactobacillus helveticus et le Lactobacillus lactis, le Streptococcus thermiphilus et leurs mélanges.

7. Procédé selon l'une quelconque des revendications précédentes, dans lequel le levain complémentaire non concentré est ajouté au lait de fromagerie selon une quantité, basée sur le poids du lait de fromagerie total, de 0,2 à 5% en poids, de préférence de 0,5 à 2% en poids.

8. Procédé selon l'une quelconque des revendications précédentes, dans lequel le fromage est affiné pendant pas plus de trois mois.

9. Fromage affiné en feuille d'aluminium de type Gouda ou Edam, pouvant être obtenu en utilisant le procédé selon l'une quelconque des revendications précédentes.
